# EUROPEAN PATENT SPECIFICATION

(11) **EP 4 184 431 B1**
(45) Date of publication and mention of the grant of the patent: **09.09.2026**
(21) Application number: 21847050.8
(22) Date of filing: 01.07.2021
(51) Int. Cl.: G06T 7/00, G06T 7/246, G06V 20/52, G06V 40/10, G06V 10/74, G06V 10/776

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS ET PROGRAMME

(30) Priority: 20.07.2020 JP 2020123796
(43) Date of publication of application: 24.05.2023
(60) Divisional application: 26182051.8 / 4 790 656
(73) Proprietor: CANON KABUSHIKI KAISHA, Tokyo 146-8501 (JP)
(72) Inventor: OGAWA Shuhei, Tokyo 146-8501 (JP)
(74) Representative: Canon Europe Limited
(86) International application number: PCT/JP2021/024898
(87) International publication number: WO 2022/019076

(56) References cited:
- WO-A1-2017/043258
- WO-A1-2019/170023
- CN-A- 110 322 473
- JP-A- 2011 059 898
- JP-A- 2017 010 224
- JP-A- 2017 041 022
- JP-A- 2019 096 006
- US-A1- 2017 053 409
- US-A1- 2019 156 157
- US-B2- 10 628 961
- ZHOU CHUNLUAN ET AL: "Bi-box Regression for Pedestrian Detection and Occlusion Estimation", 6 October 2018, 20181006, PAGE(S) 138 - 154, XP047635265

## Description

### Technical Field

The present invention relates to a technique for tracking a specific subject in an image.

### Background Art

Examples of techniques for tracking a specific subject in an image include a technique for using the luminance and color information and a technique of template correlation. A recent technique utilizing a deep neural network (hereinafter referred to as a DNN) has been attracting increasing attention as a high-accuracy tracking technique.
For example, Non-Patent Literature 1 discusses one method for tracking a specific subject in an image. An image including a tracking target and an image to be a search range are input to convolutional neural networks (hereinafter abbreviated as CNNs) having the same weight. Then, the cross correlation between feature quantities obtained from the CNNs is calculated to identify the position where the tracking target exists in the image that is the search range.
The prior art of record also comprises document WO 2019/170023 A1, which discloses a target tracking approach based on feature extraction and a final position prediction using a plurality of initial predicted positions derived from a plurality of reference images.

### Citation List

### Patent Literature

PTL 1: Japanese Patent Application Laid-Open No. 2013-219531

### Non Patent Literature

NPL 1: Bertinetto, "Fully-Convolutional Siamese Networks for Object Tracking", arXiv 2016

### Summary of Invention

### Technical Problem

However, in the technique discussed in Non-Patent Literature 1, when the image contains an object similar to the tracking target, a cross-correlation value with the similar object becomes high, and an error of erroneous tracking the similar object as a tracking target may occur. In Patent Literature 1, when an object similar to the tracking target exists in the vicinity of the tracking target, the positions of the tracking target and the similar object are predicted. However, the method discussed in Patent Literature 1 uses only the position of the tracking target for prediction. Thus, when the tracking target exists at a position away from the predicted position or when the tracking target and the similar object are close, the tracking target may be lost.

The present invention has been devised in view of the above-described problem and is directed to tracking of a specific object.

### Solution to Problem

According to a first aspect of the present invention, the invention provides an information processing apparatus as specified in claim 1. According to a second aspect of the present invention, the invention provides a program as specified in claim 12. According to a third aspect of the present invention, the invention provides an information processing method as specified in claim 13.

### Advantageous Effects of Invention

According to the present invention, a specific object can be tracked.

### Brief Description of Drawings

[Fig. 1] Fig. 1 illustrates an example of a hardware configuration of an information processing apparatus.
[Fig. 2] Fig. 2 is a block diagram illustrating an example of a functional configuration of the information processing apparatus.
[Fig. 3] Fig. 3 is a flowchart illustrating a processing procedure performed by the information processing apparatus.
[Fig. 4] Fig. 4 is a flowchart illustrating a processing procedure performed by a tracking target determination unit.
[Fig. 5] Fig. 5 is a flowchart illustrating a processing procedure performed by an object detection unit.

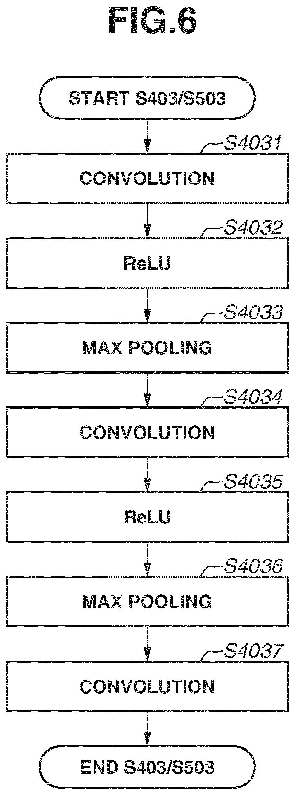

[Fig. 6] Fig. 6 is a flowchart illustrating a processing procedure performed by the information processing apparatus.
[Fig. 7] Fig. 7 is a flowchart illustrating a processing procedure performed by a tracking unit.
[Fig. 8] Fig. 8 illustrates an example where a tracking target is blocked.
[Fig. 9] Fig. 9 illustrates an example of detecting the position of the tracking target in an image.
[Fig. 10A] Fig. 10A is a flowchart illustrating a processing procedure performed by the information processing apparatus.
[Fig. 10B] Fig. 10B is a flowchart illustrating a processing procedure performed by the information processing apparatus.
[Fig. 11] Fig. 11 illustrates an example of blocking determination.
[Fig. 12] Fig. 12 illustrates an example of an image in which a plurality of candidate objects is detected.
[Fig. 13] Fig. 13 is a block diagram illustrating an example of a functional configuration of the information processing apparatus.
[Fig. 14] Fig. 14 is a flowchart illustrating a processing procedure performed by the information processing apparatus.
[Fig. 15A] Fig. 15A illustrates an example of an acquired template image and a search range image.
[Fig. 15B] Fig. 15B illustrates an example of an acquired template image and a search range image.
[Fig. 16] Fig. 16 illustrates an example map output by a learned model.
[Fig. 17] Fig. 17 illustrates an example of teacher data used for a learning model.
[Fig. 18] Fig. 18 is a block diagram illustrating an example of a functional configuration of the information processing apparatus.
[Fig. 19] Fig. 19 is a block diagram illustrating an example of a functional configuration of the information processing apparatus.
[Fig. 20] Fig. 20 is a flowchart illustrating a processing procedure performed by the information processing apparatus.

### Description of Embodiments

### <First Exemplary Embodiment>

### <Processing of Execution Phase Using Learned Model>

An information processing apparatus according to an exemplary embodiment of the present invention will be described below with reference to the accompanying drawings. Components assigned the same reference numerals in the drawings perform the same operations, and thus duplicated descriptions thereof will be omitted. The components described in the exemplary embodiment are mere examples and are not intended to limit the scope of the present invention. The invention is defined by the appended claims.

In a first exemplary embodiment, an example will be described where a tracking target and an object similar to the tracking target are tracked at the same time so that stable tracking is continued even in a situation where there are many objects similar to the tracking target or where the tracking target is blocked by another object. More specifically, the present exemplary embodiment is directed to stably tracking each object even in a case where an object similar to the tracking target is present.

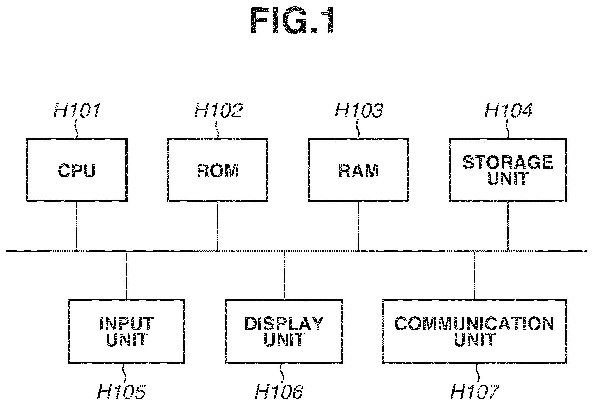

Fig. 1 illustrates a hardware configuration of an information processing apparatus 1 that tracks a specific object in images captured at a plurality of times according to the present exemplary embodiment. A central processing unit (CPU) H101 executes a control program stored in a read only memory (ROM) H102 to control the entire apparatus. A random access memory (RAM) H103 temporarily stores various types of data from each component. A program is loaded into the RAM H103 to be in a state executable by the CPU H101.

A storage unit H104 stores data to be processed and tracking target data according to the present exemplary embodiment. As media of the storage unit H104, a hard disk drive (HDD), a flash memory, and various optical media can be used. An input unit H105 includes a keyboard, a touch panel, a dial, or the like for accepting inputs from a user, and is used to set a tracking target. A display unit H106 includes a liquid crystal display or the like and displays a subject and a tracking result to the user. The information processing apparatus 1 can communicate with another apparatus such as an imaging apparatus via a communication unit H107.

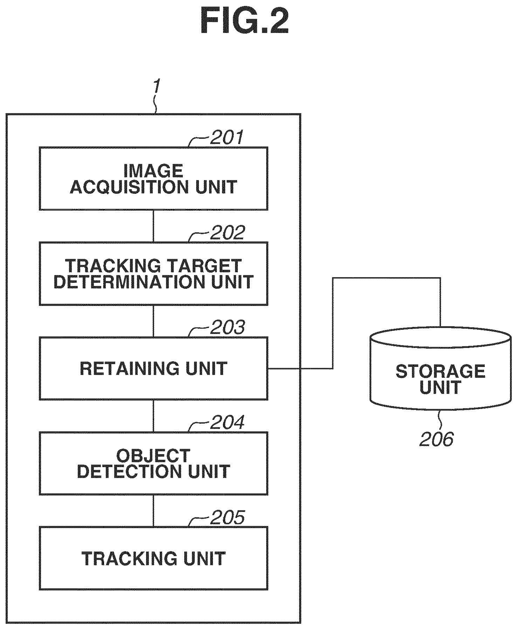

Fig. 2 is a block diagram illustrating an example of a functional configuration of the information processing apparatus 1. The information processing apparatus 1 includes an image acquisition unit 201, a tracking target determination unit 202, a retaining unit 203, an object detection unit 204, and a tracking unit 205, and these units are connected to a storage unit 206. The storage unit 206 may be an external apparatus, or may be included in the information processing apparatus 1. Each of the functional units will be briefly described below. The image acquisition unit 201 acquires an image in which a predetermined object is captured by an imaging apparatus. Examples of the predetermined object include a person and a vehicle, i.e., objects having some individual differences. In the exemplary embodiment below, tracking of a person will be described as a specific example. The tracking target determination unit 202 determines an object to be the tracking target (object of interest) among objects contained in the image. The retaining unit 203 retains a feature quantity of an object to be a tracking target candidate from an initial image. The object detection unit 204 detects positions of objects in images captured at a plurality of times. The tracking unit 205 identifies and tracks the tracking target in the images captured at the plurality of times.

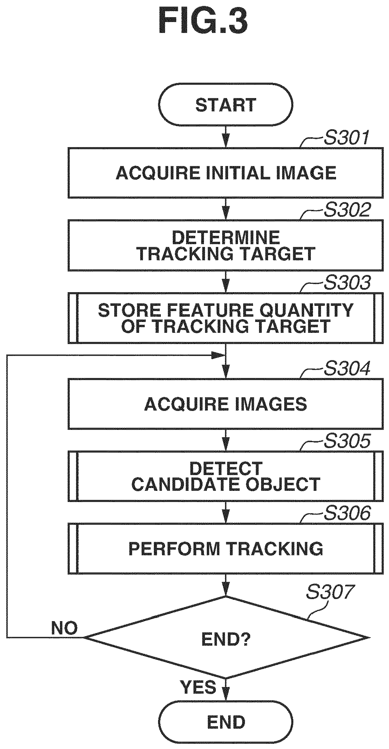

Fig. 3 is a flowchart illustrating a flow of processing according to the present exemplary embodiment. In the following descriptions, each process (step) is indicated with a leading "S", and the term "process (step)" is omitted. However, the information processing apparatus does not necessarily need to perform all of the processes illustrated in the flowchart. Each piece of processing performed by the CPU H101 is illustrated as a functional block.

In S301, the image acquisition unit 201 acquires an image (initial image) in which a predetermined object is captured. The image acquisition unit 201 may acquire an image captured by an imaging apparatus connected to the information processing apparatus or acquire an image stored in the storage unit H104. The processing in S301 to S303 is directed to setting the object of interest to be the tracking target using the initial image.

In S302, the tracking target determination unit 202 determines the object to be the tracking target (object of interest) in the image acquired in S301. There may be one or a plurality of tracking targets. In the present exemplary embodiment, an example of selecting one tracking target will be described. In this step, the tracking target determination unit 202 acquires the position of an image feature indicating a predetermined object from the image by using a learned model that detects the position of the predetermined object, and determines a partial image containing the object of interest. As the learned model, for example, a model that has learned the image feature of a predetermined object such as a person or a vehicle in advance is used. A learning method will be described below. When one object is detected in the image, the object becomes a tracking target. When the predetermined object is not detected in the image, for example, the image in the next frame may be input. When a plurality of objects is acquired, the tracking target determination unit 202 outputs a tracking target candidate and then determines the tracking target by using a method specified in advance. In this case, the tracking target determination unit 202 determines the tracking target (object of interest) in the acquired image according to an instruction specified by the input unit H105.

Examples of specific methods for determining the tracking target include a method for determining the tracking target by a touch on the subject displayed on the display unit H106. In addition to specification by the input unit H105, the tracking target determination unit 202 may determine the tracking target by automatically detecting a main subject in the image. Examples of the method for automatically detecting the main subject in the image include the method discussed in Japanese Patent No. 6556033. The tracking target determination unit 202 may also determine the main subject based on both the specification by the input unit H105 and a result of detecting an object in the image. Examples of techniques for detecting an object in an image include *"Liu, SSD: Single Shot Multibox Detector, In: ECCV2016".*

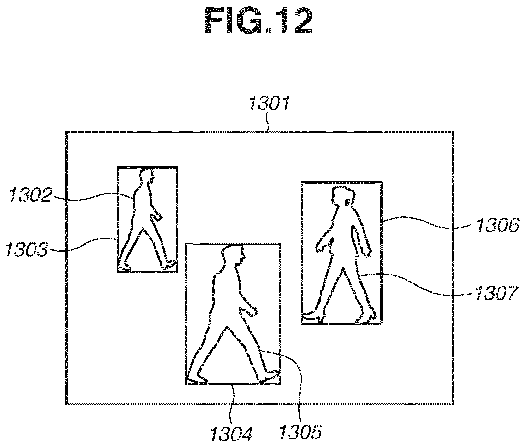

Fig. 12 illustrates a result of detecting tracking target candidates in the image. Persons 1302, 1305, and 1307 in Fig. 12 are the tracking target candidates. Frames 1303, 1304, and 1306 are bounding boxes (hereinafter referred to as BBs) indicating positions of the detected candidates. The user can determine the tracking target by touching any one of the candidate BBs displayed on the display unit H106 or by selecting any one thereof with a dial. There are various methods for determining the tracking target as described above, and the present exemplary embodiment is not intended to limit a method for specifying the tracking target.

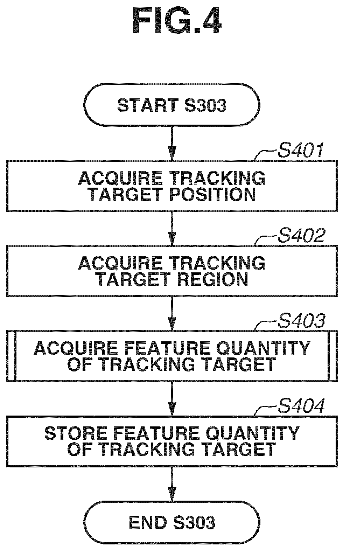

In S303, the retaining unit 203 retains the feature quantity of the tracking target from the image containing the determined tracking target, based on the learned model. Fig. 4 is a flowchart illustrating feature quantity retaining processing in S303 in detail. The retaining unit 203 generates and retains a template feature quantity representing the tracking target, based on the image acquired by the image acquisition unit 201 and a bounding box (hereinafter referred to as a BB) indicating the position of the tracking target acquired by the tracking target determination unit 202.

In S401, the retaining unit 203 acquires information about the position of the tracking target in the image determined by the tracking target determination unit 202. The acquired information about the position of the tracking target is hereinafter referred to as a bounding box (BB). As the information about the position of the tracking target, information about the center position of the tracking target input by the user when the tracking target is determined in S302, or a result of detecting a predetermined position (e.g., the center of gravity) of the tracking target by a learning model is used.

In S402, the retaining unit 203 acquires a template image that is an image indicating the tracking target extracted into a predetermined size based on the position of the tracking target in the image. More specifically, the retaining unit 203 clips, as the template image, the periphery of the region acquired in S401 from the initial image, and then resizes the image into a predetermined size. The predetermined size may be adjusted to the size of the input image of the learned model.

In S403, the retaining unit 203 inputs the template image indicating the tracking target to the learned model for detecting the position of the predetermined object in the input image, thus acquiring the feature quantity of the tracking target. In this case, the retaining unit 203 inputs the image resized in S402 to a convolutional neural network (CNN) (the learned model). The CNN has been trained in advance to acquire a feature quantity that makes it easier to distinguish between a tracking target and a non-tracking target. A learning method will be described below. The CNN includes convolution and nonlinear transform such as Rectified Linear Unit (hereinafter referred to as ReLU) and Max Pooling. ReLU and Max Pooling described herein are to be considered as mere examples. Leaky ReLU or a sigmoid function may be used instead of ReLU. Average Pooling may be used instead of Max Pooling. The present exemplary embodiment is not limited to these methods. Then, in S404, the retaining unit 203 retains the feature quantity of the tracking target acquired in S403 as a template feature quantity indicating the tracking target. The above-described processing is processing in the tracking target setting phase.

In S304, the image acquisition unit 201 acquires images captured at a plurality of times to perform tracking processing. In the subsequent processing, there is described processing for detecting the tracking target set in a first image from a second image captured at a different time from the first image. The first and second images are captured so that as large portion of the tracking target as possible is included in the images.

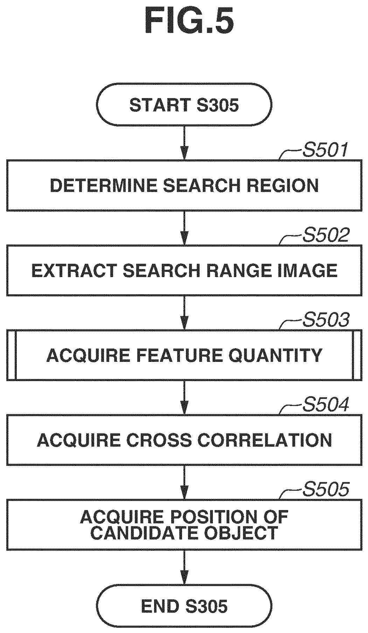

In S305, the object detection unit 204 detects a candidate object similar to the tracking target based on the feature quantity of the tracking target and feature quantities of the object acquired from a plurality of images. Fig. 5 is a flowchart illustrating the processing performed by the object detection unit 204 in S305. Processing in S304 and subsequent steps is processing to be performed on images captured after the image in which the tracking target is determined, and is processing for detecting the tracking target in the images.

In S501, the object detection unit 204 acquires a search range image (partial image) indicating a region to be subjected to tracking target search from the current image (second image). In this case, the object detection unit 204 acquires the search range image based on the last detection position of the tracking target or the candidate object. More specifically, the object detection unit 204 extracts, from the second image, the partial image with a predetermined size from a region corresponding to the vicinity of the candidate object detected in the first image (past image). The size of the search region may be changed depending on the speed of the object and the angle of view of the image. The search region may be the entire search image or the periphery of the last position of the tracking target. Setting a partial region, not the entire region, of the input image as a search range provides effects of improving the processing speed and reducing tracking correlation errors.

In S502, the object detection unit 204 extracts an input image to be input to the learned model, from the search range image. The object detection unit 204 clips a search range region from the search range image and then resizes the search range region. The size of the search range is determined to be a constant multiple or the like of the BB size of the tracking target. The feature quantity with little noise can be acquired when the feature quantities are acquired from images with the same size. The object detection unit 204 clips a region based on the determined search region and resizes the region so that a resizing ratio is equivalent to that in S402.

**In** S503, the object detection unit 204 inputs the extracted search range image to the learned model (CNN) for detecting the position of the predetermined object in the input image, to acquire the feature quantity of each search range image. More specifically, the object detection unit 204 inputs the image of the clipped region to the CNN. The feature quantity of each search range image indicates a feature quantity of an object existing in each search range image. The weight of the CNN in S503 is assumed to be partly or entirely identical to the weight of the CNN in S403. For example, when a certain search range image contains a blocking object that blocks a person, the CNN enables acquisition of the feature quantity indicating the blocking object. When another partial image contains an animal but not a person, the feature quantity indicating the animal is acquired.

**In** S504, the object detection unit 204 acquires a cross correlation between the feature quantity of the tracking target and the feature quantity of the object existing in the current search range image acquired in S503. The cross correlation is an index representing a similarity between detected objects. **In** this case, an object similar to the tracking target (an object of the same type as the tracking target) is referred to as the candidate object. More specifically, an object having the cross correlation larger than a predetermined value is the candidate object. The candidate object includes one or both of the tracking target and the non-tracking target. **In** a specific example, when the tracking target is a person, a search range image having the feature quantity indicating a person has a high cross correlation.

In S505, the object detection unit 204 detects the position of the candidate object in the current image. Since the weight of the CNN in S503 is partly or entirely identical to the weight of the CNN in S403, a value of the cross correlation increases at a position in a search range where a candidate object is highly likely to exist. This makes it possible to detect the position of the candidate object in a search range image having the value of the cross correlation larger than or equal to the threshold value. More specifically, based on the cross correlation acquired in S504, the object detection unit 204 detects a position where the cross correlation is larger than the predetermined value, as the position of the candidate object. The tracking target is less likely to exist at a position where the cross correlation is smaller than the predetermined value. In this case, the object detection unit 204 further acquires the BB that surrounds the candidate object based on the position of the candidate object. First, the object detection unit 204 determines the position of the BB based on a search range image that has indicated a response of a high cross correlation.

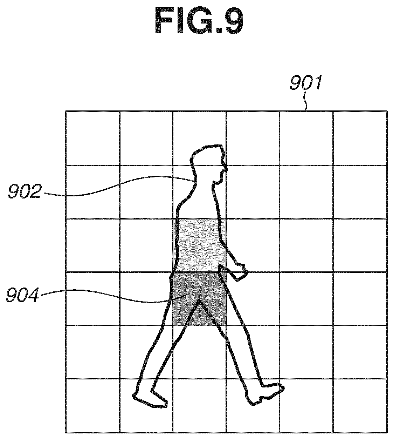

Fig. 9 illustrates an example of a processing result in S305. A map 901 is obtained based on the cross correlation. The tracking target is a person 902, and a cell 904 near the center of the person 902 indicates a high cross-correlation value. When the correlation value is larger than or equal to the threshold value, the person 902 can be estimated to be positioned at the cell 904. Meanwhile, the width and height of the BB may be learned in advance to allow the CNN to estimate the width and height (described below). Alternatively, the width and height of the BB of the tracking target acquired in S302 may be used as they are.

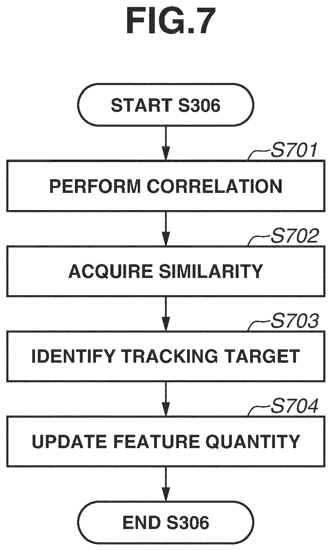

In S306, the tracking unit 205 identifies a correlation between a candidate object detected in the first image among the plurality of images and a candidate object in the second image captured at a different time from the first image. Identifying the correlation between the objects detected at the plurality of times enables tracking of correlated objects. More stable tracking is enabled since the feature quantity and the position of the tracking target are updated based on the image in which the tracking target is detected. Fig. 7 is a flowchart illustrating processing performed by the tracking unit 205.

In S701, the tracking unit 205 acquires a combination of a candidate object detected in an image captured at a time in the past prestored in the storage unit 206 and a candidate object detected in an image captured at the current time (correlation candidates). In this case, past candidate objects are correlated with current candidate objects in pairs to generate all possible combinations of the past and current candidate objects. Each of the candidate objects detected in the past images is assigned a tracking target/non-tracking target label. When there is one tracking target, each object identified as the tracking target among the past candidate objects may be correlated with each of the current candidate objects.

In S702, the tracking unit 205 identifies a combination (correlation) having an acquired similarity higher than or equal to a threshold value. A high similarity between the past and current candidate objects indicates that the past and current candidate objects are highly likely to be identical objects. There is a plurality of methods for correlation. For example, there are a method for preferentially correlating candidate objects having a higher similarity, and a method that uses the Hungarian algorithm. The correlation method is not limited herein. In this case, the tracking unit 205 identifies the identical objects based on the similarity between a candidate object other than the tracking target in the first image and a candidate object in the second image. Tracking other objects similar to an object that is the tracking target in this way can prevent the tracking target from being correlated with another object. Thus, stable tracking can be performed. Suitably performing correlation in this way enables recognition of the past and current tracking targets as identical objects.

For example, a similarity L between a past candidate c₁ and a current candidate c₂ is calculated as follows. Here, BB denotes a vector that includes four different variables (center coordinate value x, center coordinate value y, width, and height) of each candidate BB, and f denotes the feature of each candidate. The feature refers to a feature on which each candidate is positioned, extracted from a feature map acquired from the CNN. W₁ and W₂ are empirically acquired coefficients and W₁ > 0 and W₂ > 0. More specifically, the similarity becomes higher with closer feature quantities, and the similarity becomes higher with closer detection positions and closer sizes of detection regions.
[Equation 1] $L \left({c}_{1}, {c}_{2}\right) = - {W}_{1} \left‖{BB}_{1}-{BB}_{2}\right‖ - {W}_{2} \left‖{f}_{1}-{f}_{2}\right‖$

Then, in S703, the tracking unit 205 identifies the tracking target based on a result of correlation. As the result of the correlation acquired in S702, the tracking unit 205 can identify the current candidate object correlated with the past tracking target, as the tracking target. A candidate object other than the tracking target is supplied with information indicating that the object is not a tracking target. When there is no current candidate object having a similarity to the feature quantity of the past tracking target higher than the predetermined threshold value, it is likely that the tracking target is outside the angle of view or blocked by another object. In that case, the tracking unit 205 may notify that no tracking target is identified.

Finally, in S704, the storage unit 206 retains the feature quantity of the tracking target in the second image and the feature quantity of the candidate object in the second image. When the tracking target is identified in the current image, the storage unit 206 updates the feature quantity of the tracking target. When a candidate object having a similarity to the feature quantity of the tracking target in the first image larger than the predetermined threshold value is detected in the second image, the storage unit 206 retains the feature quantity acquired from the second image as the feature quantity of the tracking target. When no candidate object having the similarity to the feature quantity of the tracking target larger than the predetermined threshold value is detected in the second image, the storage unit 206 retains the feature quantity acquired from the first image as the feature quantity of the tracking target. When no tracking target is detected in the current image, the tracking unit 205 retains the feature quantity and position of the tracking target in the past image. Further, the storage unit 206 stores the feature quantity of the current candidate object supplied with the tracking target/non-tracking target label. The storage unit 206 updates the BB (position and size) and the feature of the tracking target and the candidate object thereof. Retaining the feature quantity and the determination result of candidate objects similar to the tracking target enables more stable tracking.

In S307, the image acquisition unit 201 determines whether to end the tracking processing. When the tracking processing is to be continued, the processing returns to S304. When the tracking process is to be ended, the processing proceeds to end. For example, the image acquisition unit 201 determines to end the processing if an end instruction from the user is acquired or if the image of the next frame cannot be acquired. When the image of the next frame can be acquired, the processing returns to S304. The processing in the tracking processing execution step has been described above. The learning processing will be described below.

### <Learning Step>

Now, a method for training the learned model (specifically the CNN) for estimating an object position in an image is described. The learned model used herein is assumed to have learned an object classification task (e.g., a task for detecting a person and not detecting an animal) to some extent, so that the model learns to be able to recognize an individual based on an external feature of a predetermined object. This enables tracking of a specific object.

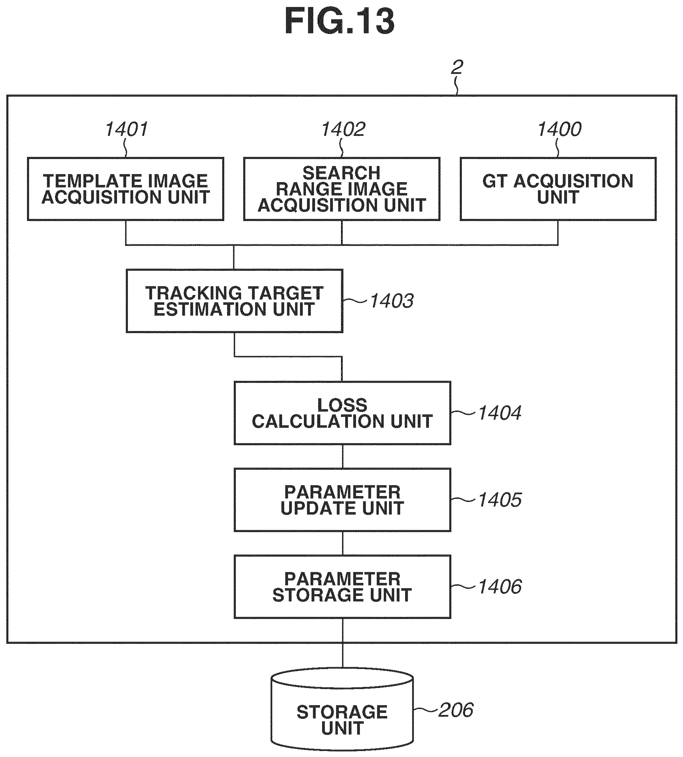

Assume an example case where a person A wears red clothing, and a person B wears yellow clothing. Since a color of the clothing is not a necessary feature for a learned model that merely detects a person, the learned model may have learned to ignore the color of the clothing in a person detection task. However, when detecting (tracking) only the person A, the model needs to learn a feature that distinguishes between the persons A and B. In this case, the color of the clothing is an important feature required to identify an individual. In the present exemplary embodiment, among the objects in the same category, the model learns the feature quantity of a tracking target object while distinguishing the tracking target object from other objects in the same category. Fig. 13 illustrates an example of a functional configuration of an information processing apparatus 2 at the time of learning. The information processing apparatus 2 includes a ground truth acquisition unit 1400, a template image acquisition unit 1401, a search range image acquisition unit 1402, a tracking target estimation unit 1403, a loss calculation unit 1404, a parameter update unit 1405, a parameter storage unit 1406, and a storage unit 206.

The storage unit 206 stores images captured at a plurality of times and GT information indicating the position and size of a tracking target in each image. In this case, the storage unit 206 stores information about the center position (or the BB indicating the region) of the tracking target object input by the user for each image as the GT information. The GT information may be generated by a method other than GT assignment by the user. For example, a result of detecting the position of a tracking target object by the use of another learned model may also be used. The GT acquisition unit 1400, the template image acquisition unit 1401, and the search range image acquisition unit 1402 each acquire an image stored in the storage unit 206.

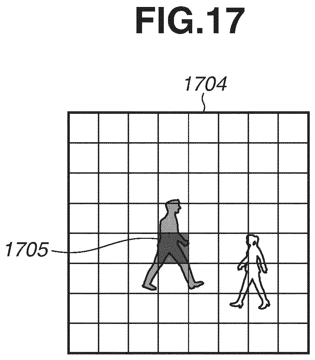

The ground truth (hereinafter referred to as GT) acquisition unit 1400 acquires the GT information to acquire a correct-answer position of an object that is the tracking target in the template image and a correct-answer position of the tracking target in a search range image. The GT acquisition unit 1400 also acquires the BB of the tracking target in the template image acquired by the template image acquisition unit 1401, and the BB of the tracking target in the search range image acquired by the search range image acquisition unit 1402. More specifically, referring to an image 1704 illustrated in Fig. 17, an object 1705 that is a tracking target object is supplied with information indicating that the object 1705 is the tracking target object, and a remaining region is supplied with information indicating that the region is not the tracking target object. For example, the region of the tracking target object 1705 is assigned a label with a real number 1, and the other region is assigned a label with a real number 0.

The template image acquisition unit 1401 acquires an image containing the tracking target as the template image. The template image may contain a plurality of objects in the same category. The search range image acquisition unit 1402 acquires the image to be subjected to tracking target search. More specifically, the feature quantity of the specific object to be the tracking target can be acquired from this image. For example, the template image acquisition unit 1401 selects any frame from a series of sequence images, and the search range image acquisition unit 1402 selects another frame not selected by the template image acquisition unit 1401 among the sequence images.

The tracking target estimation unit 1403 estimates the position of the tracking target in the search range image. The tracking target estimation unit 1403 estimates the position of the tracking target in the search range image based on the template image acquired by the template image acquisition unit 1401 and the search range image acquired by the search range image acquisition unit 1402.

The loss calculation unit 1404 calculates a loss based on the tracking result acquired by the tracking target estimation unit 1403 and the position of the tracking target in the search range image acquired by the GT acquisition unit 1400. The loss is smaller at a position closer to an estimation result from teacher data. The loss calculation unit 1404 acquires the correct answer of the position of the tracking target in the search range image based on the GT information acquired by the GT acquisition unit.

The parameter update unit 1405 updates CNN parameters based on the loss acquired by the loss calculation unit 1404. Herein, the parameter update unit 1405 updates the parameters so that loss values converge. When a sum total of the loss values converges or when a loss value becomes smaller than a predetermined value, the parameter update unit 1405 updates a parameter set and ends the learning.

The parameter storage unit 1406 stores the CNN parameters updated by the parameter update unit 1405, in the storage unit 206 as learned parameters.

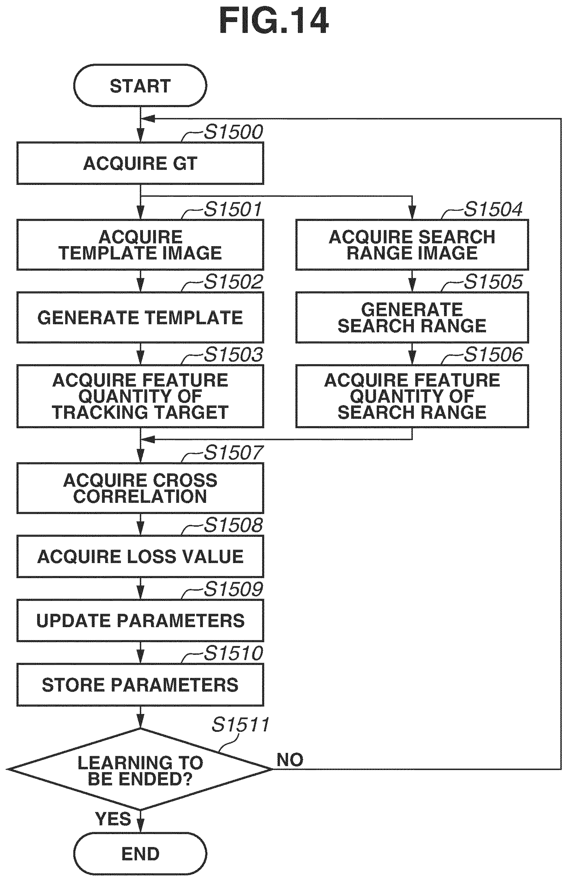

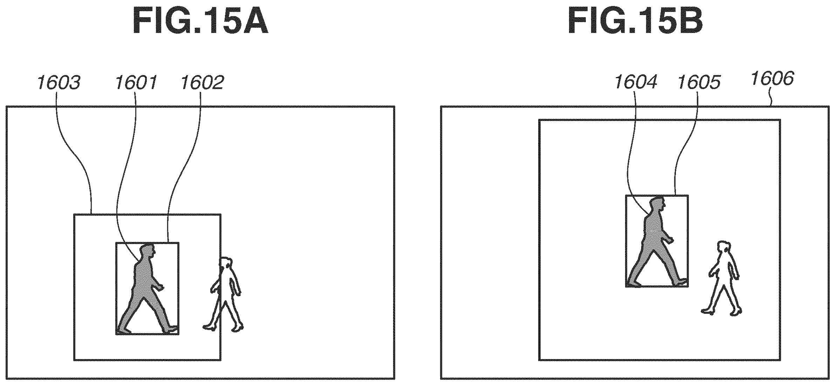

A flowchart of the learning processing will be described with reference to Fig. 14. In S1500, the GT acquisition unit 1400 acquires the GT information and, based on the GT information, acquires the correct-answer position (the BB to be subjected to tracking) of the tracking target object in the template image and the correct-answer position of the tracking target in the search range image. In S1501, the template image acquisition unit 1401 acquires the template image. For example, the template image acquisition unit 1401 acquires an image as illustrated in Fig. 15A. In Fig. 15A, an object 1601 is the tracking target, a partial image 1602 indicates the BB of the tracking target acquired by the GT acquisition unit 1400, and a partial image 1603 indicates the region to be clipped as a template. In other words, in this case, the template image acquisition unit 1401 acquires the partial image 1603 as the template image.

In S1502, the template image acquisition unit 1401 clips the region to be used as the template from the template image and then resizes the region to a predetermined size. The size of the region to be clipped is determined, for example, as a constant multiple of the BB size based on the BB of the tracking target.

In S1503, the tracking target estimation unit 1403 inputs the template image generated in S1502 to the learning model (CNN) and then acquires CNN feature quantity of the template.

In S1504, the search range image acquisition unit 1402 acquires the search range image. The partial image to be a search range is acquired as a partial image containing the tracking target based on the position and size of the tracking target object. Fig. 15B illustrates an example of an image to be the search range. In Fig. 15B, an object 1604 indicates the tracking target, a partial image 1605 indicates the BB of the tracking target, and a partial image 1606 indicates the search range region. The search range image 1606 contains an object similar to the tracking target object.

In S1505, the search range image acquisition unit 1402 clips the search range region from the search range image and then resizes the search range region. The size of the search range is determined to be a constant multiple of the BB size for the tracking target. The search range image acquisition unit 1402 resizes the search range region at a magnification used to resize the template in S1502 (so that the size for the tracking target after resizing of the template approximately coincides with the size of the tracking target after resizing of the search range).

In S1506, the tracking target estimation unit 1403 inputs the search range image generated in S1506 to the learning model (CNN) and then acquires the CNN feature quantity of the search range.

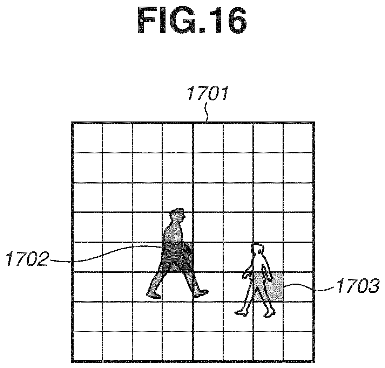

In S1507, the tracking target estimation unit 1403 estimates the position of the tracking target in the search range image. The tracking target estimation unit 1403 calculates the cross correlation indicating the similarity between the CNN feature of the tracking target acquired in S 1506 and the CNN feature of the search range acquired in S 1506, and then outputs the cross correlation as a map. The tracking target estimation unit 1403 estimates the tracking target by indicating a position having a cross-correlation value larger than or equal to the threshold value. Fig. 16 illustrates a map indicating an estimation result. A map 1701 is acquired based on a cross correlation, where regions 1702 and 1703 indicate positions each having a large cross-correlation value. When the cross correlation is obtained in this way, a position where an object similar to the tracking target is highly likely to exist provides a high cross-correlation value. On the other hand, 1705 in Fig. 17 indicates the position of the tracking target as a correct answer acquired by the GT acquisition unit 1400. More specifically, since 1702 indicates the position of the tracking target, a desirable value is estimated. However, since 1703 provides a high cross-correlation value although the region 1703 is not the tracking target, an undesirable value is estimated. The learning step is intended to update the weight so that the position of the tracking target provides a high cross-correlation value and the position of a non-tracking target provides a low cross-correlation value.

In S1508, the loss calculation unit 1404 calculates a loss related to the inferred position of the tracking target and a loss related to the inferred size of the tracking target. With regard to the loss related to the position, the loss calculation unit 1404 calculates a loss to advance the learning so that the cross correlation value at the tracking target position indicates a large value. The ground truth (hereinafter referred to as GT) acquisition unit 1400 acquires the BB of the tracking target in the template image acquired by the template image acquisition unit 1401 and the BB of the tracking target in the search range image acquired by the search range image acquisition unit 1402.

The loss function can be represented by Formula (1-2), where Cin denotes the map 1701 acquired in the processing in S1507, and Cgt denotes the GT map 1704. Formula (1-2) represents the mean square of a difference between the maps Cin and Cgt on a pixel basis. The loss decreases when the tracking target is appropriately estimated, and increases when a non-tracking target is estimated to be a tracking target or when a tracking target is estimated to be a non-tracking target.
[Equation 2] ${Loss}_{c} = \frac{1}{N} \sum {\left({C}_{in}-{C}_{gt}\right)}^{2}$

Likewise, the loss related to the size is calculated by Formula (1-3).$\begin{matrix}{Loss}_{W} = \frac{1}{N} \sum {\left({W}_{in}-{W}_{gt}\right)}^{2} Formula \left(1-3\right) \\ {Loss}_{H} = \frac{1}{N} \sum {\left({H}_{in}-{H}_{gt}\right)}^{2} Formula \left(1-4\right)\end{matrix}$

Loss_{W} and Loss_{H} denote the loss related to width and the loss related to height of the estimated tracking target, respectively. W_{gt} and H_{gt} denote the values of the width and the height of the tracking target embedded at the position of the tracking target, respectively. The losses are calculated by using Formulas (1-3) and (1-4), and thus the learning is advanced so that, for Wᵢₙ and Hᵢₙ, the width and the height of the tracking target are inferred at the position of the tracking target, respectively. When all of the losses are summed up, Formula (1-5) results. $Loss = {Loss}_{C} + {Loss}_{W} + {Loss}_{H}$

Although, in this case, the loss is described as the mean squared error (hereinafter referred to as MSE), the loss is not limited to MSE. The loss may be Smooth-L1 or the like. The calculation formula for the loss is not limited. Further, a loss function for the position and a loss function for the size may be different.

In S1509, the parameter update unit 1405 (learning unit) updates the CNN parameters based on the loss calculated in S1508. The parameters are updated based on backpropagation by using stochastic gradient descent (SGD) with Momentum or the like. Outputs of the loss functions for one image have been described above. In the actual learning, however, loss values are calculated by Formula (1-2) with respect to scores estimated for a plurality of various images. The parameter update unit 1405 updates interlayer connection weighting factors of the learning model so that the loss values for the plurality of images each becomes smaller than a predetermined threshold value.

In S1510, the parameter storage unit 1406 stores the CNN parameters updated in S1509 in the storage unit 206. In an inference step, an inference is made by using the parameters stored in S1510 to enable correct tracking of the tracking target.

In S1511, the parameter update unit 1405 determines whether to end the learning. When the loss value acquired by Formula (1-2) becomes smaller than the predetermined threshold value, the parameter update unit 1405 determines that the learning is to be ended.

### <Effects of First Exemplary Embodiment>

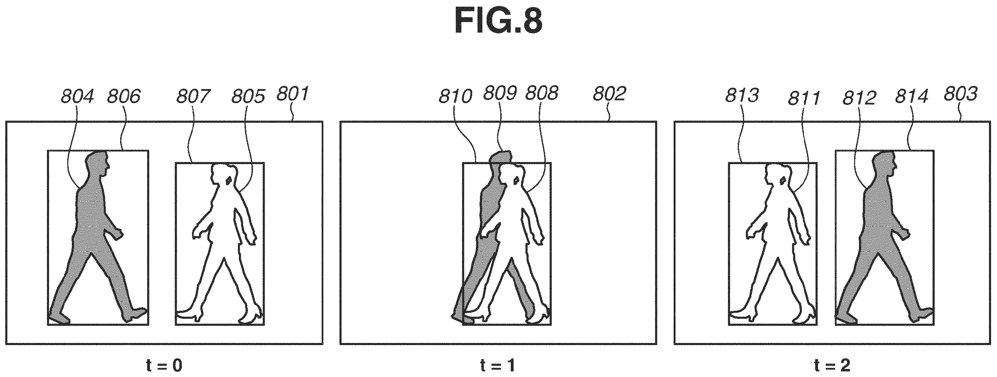

The present exemplary embodiment is characterized in tracking the tracking target and an object similar to the tracking target at the same time. The fact that simultaneously tracking an object similar to the tracking target reduces the possibility of erroneously tracking a similar target will be described with reference to Fig. 8. Images 801, 802, and 803 are acquired at times t = 0, t = 1, and t = 2, respectively. Persons 804 and 805 are in the image 801, and the person 804 is the tracking target, and the person 805 is the similar object.

Firstly, a case where only the tracking target 804 is being tracked will be described below. In this case, the object 804 being correctly tracked at the time t = 0 is blocked by an object 808 at the time t = 1. When blocking occurs, with regard to the feature quantity of the object 804, the feature quantity lacking in the likelihood of an object due to the blocking is highly likely to be detected. For the object 808, the feature quantity with a high likelihood of an object is detected. Thus, at the time t = 1, the tracking target is highly likely to be recognized as the object 808, and then the object 808 is started to be erroneously tracked as the tracking target.

A case where not only the tracking target 804 but also the similar object 805 are tracked at the same time will be described below. At the time t = 1, there are two different past tracking target candidates, the objects 804 and 805. At the time t = 1, only an object 808 is acquired as a new tracking target candidate since an object 809 is being blocked. At this time, when the similarity between the past candidate 804 and the object 808 is compared with the similarity between the past candidate 805 and the object 808, the similarity between the objects 805 and 808 is higher than the similarity between the objects 804 and 808. This is because the CNN feature correlated with each candidate has been learned to distinguish between the objects, and the position and the size of the BB moderately change over time. Thus, the current candidate 808 is correlated not with the past candidate 804 but with the past candidate 805. The latest feature quantity of the object 805 is updated to the feature quantity of the object 808. For the object 804 that is not detected at the time t = 1, the feature quantity acquired at the time t = 0 is retained. Then, at the time t = 2, the similarity between candidate objects are calculated. At the time t = 2, the objects 804 and 808 are past candidates, while objects 811 and 812 are acquired as two new candidates. Since these two candidate objects are not blocked, desirable feature quantities can be acquired therefor. After the similarity calculation, high similarities are obtained between the objects 808 and 811 and between the objects 804 and 812, and low similarities are obtained between the objects 808 and 812 and between the objects 804 and 811. Thus, the object 804 that is the tracking target is correlated with the object 812 to enable correct tracking of the tracking target.

### <Modification 1-1> Online Metric Learning

In a modification 1-1, the weight W₂ for the feature quantity is sequentially updated using the feature quantities of a tracking target and a similar object acquired in the time series, in Formula (1-1) according to the first exemplary embodiment.

An example is described below.
[Equation 4] ${W}_{2} = λ \left|\sum {f}_{target}-\sum {f}_{distractor}\right|$

f_{target} denotes the feature quantity of a tracking target acquired at each time, and f_{distractor} denotes the feature quantity of a similar object acquired at each time.

The weight is updated using the features of the tracking target and the similar object based on Formula (1-2), and thus the similarity can be calculated by applying a larger weight to a feature dimension that makes it easier to distinguish between the tracking target and the similar object among the feature dimensions. This makes it easier to distinguish between the tracking target and the similar object even if the features of the tracking target and similar object are close in a feature space.

### <Modification 1-2> Offline Metric Learning

In a modification 1-2, transformation to obtain the similarity between feature quantities is calculated in advance by metric learning, in Formula (1-1) according to the first exemplary embodiment. When F denotes a function of transforming the feature quantity, Formula (1-1) is represented as Formula (1-7).
[Equation 5] $\begin{matrix}L \left({c}_{1}, {c}_{2}\right) = - {W}_{1} \left‖{BB}_{1}-{BB}_{2}\right‖ \\ - {W}_{2} \left‖F \left({f}_{1}\right)-F \left({f}_{2}\right)\right‖\end{matrix}$

The transform F represents a structure with connections of neural networks in one or more layers, and can learn in advance using the triplet loss or the like. Learning by the transform F using the triplet loss makes it possible for the transform F to learn such a transformation in which the distance is short if the past and the current objects are identical objects or long if the past and the current objects are different objects. The learning method using the triplet loss is described in detail in *"Wang, Learning Fine-grained Image Similarity with Deep Ranking, In: CVPR2014".*

### <Second Exemplary Embodiment> Blocking Determination

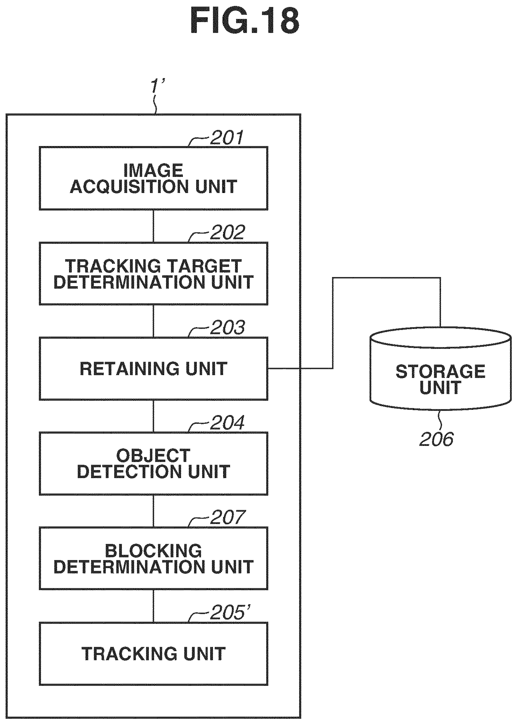

A second exemplary embodiment further performs blocking determination processing in the tracking target identification processing in S306 in Fig. 7 according to the first exemplary embodiment. Performing blocking determination prevents the tracking target from being switched to another similar object even when the tracking target is blocked. Processing different from the first exemplary embodiment will be described in detail. The hardware configuration is similar to that according to the first exemplary embodiment. Fig. 18 illustrates an example of a functional configuration of an information processing apparatus 1' according to the second exemplary embodiment.
The configuration is basically similar to that according to the first exemplary embodiment in Fig. 2, and additionally includes a blocking determination unit 207 for performing the blocking determination. Components assigned the same reference numerals as components according to the first exemplary embodiment perform the same processing. The blocking determination unit 207 determines a blocking relation between objects based on a partial image of a candidate object detected in an image. Further, a tracking unit 205' tracks the tracking target based on a determination result of the blocking determination unit 207.

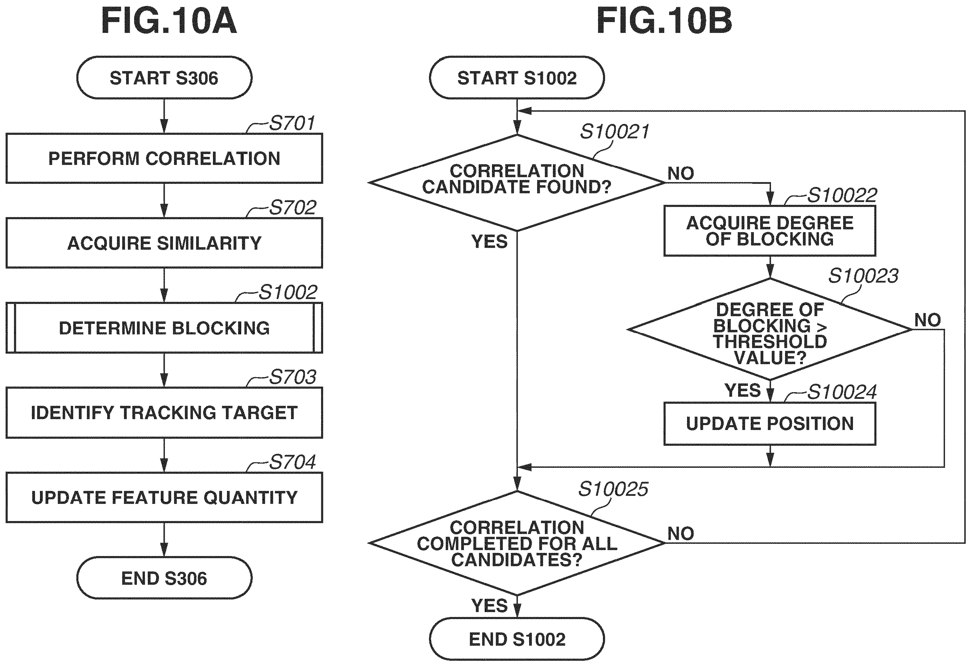

Now, processing performed by the information processing apparatus 1' according to the second exemplary embodiment will be described. Flowcharts according to the present exemplary embodiment correspond to Figs. 3, 10A, and 10B. Basic processing is similar to that according to the first exemplary embodiment, and only the processing in S306 is different. Thus, the difference in S306 will be described in detail below, and descriptions of other processing will be omitted. In S305, a candidate object similar to the target object is detected based on the feature quantity of the tracking target. In this case, when the tracking target is blocked by another object, the other object is detected as a candidate object if the object blocking the tracking target is an object similar to the tracking target. In this case, although the tracking target is correlated with the position of the similar object that is blocking in the blocking determination processing, the tracking target can be tracked again at the timing when the blocking is resolved since the former tracking feature is retained. On the other hand, when the tracking target is blocked by an obstacle such as a wall, the blocked tracking target will not be detected as a candidate object in S305. In this case, in the blocking determination processing on the subsequent stage, it is determined that there is no candidate object that can be correlated with the last detected tracking target immediately before being blocked, and the feature quantity of the tracking target is stored in S303. Subsequently, tracking can be restarted at a timing when the blocking is resolved and the tracking target can be detected again.

Fig. 10A is a flowchart illustrating the tracking target identification processing in S306 including the blocking determination processing. First, in S701, the tracking unit 205' acquires the similarity between the candidate at the past time prestored in the storage unit 206 and the candidate at the current time acquired by the object detection unit 204. The processing in S701 is performed in a manner similar to the processing in S701 according to the first exemplary embodiment. Next, in S702, the tracking unit 205' performs the correlation based on the similarity between the past and the current candidates. The processing in S702 is also performed in a similar manner to the processing in S702 according to the first exemplary embodiment.

In S 1002, the blocking determination unit 207 determines the presence or absence of a blocking region where the candidate object is blocked based on the position of the candidate object in the current processing target image (second image). More specifically, the blocking determination unit 207 performs the blocking determination for each candidate object in the current image. The blocking determination processing in S1002 will be described in more detail with reference to Fig. 10B. In this case, the blocking determination unit 207 performs the blocking determination on a candidate of which no correlated candidate is found in S702 (referred to as an object of interest). First, in S 10021, the blocking determination unit 207 determines whether the correlation is established for all candidate objects detected in the past in S702. When the correlation with candidate objects detected in the current image is completed for all of the candidate objects detected in the past image (first image), the processing proceeds to S 10025. Among the candidate objects detected in the past image, if there is a past candidate object (object of interest) that has a similarity to a candidate object detected in the current image smaller than or equal to the threshold value, the processing proceeds to S10022. More specifically, when the processing proceeds to S 10022, there may be a blocked candidate object. In S10022, for the current candidate object (object of interest), the blocking determination unit 207 acquires information indicating a degree of overlapping between the BB of the relevant candidate and the BB of another candidate. As an index indicating the degree of overlapping between objects, Intersection of Union (hereinafter referred to as IoU) is calculated. More specifically, when partial images (BBs) for the candidate objects detected in the current image are a region A of an object A and a region B of an object B, IoU for the object A and the object B is calculated as a region (A ∩ B)/(A U B). Higher IoU indicates a higher degree of overlapping between the objects. The other candidate object of which IoU exceeds a threshold value is set as an occluder of the relevant candidate. In this case, the status of the candidate object A is determined to be "Blocked". In S10024, the position of a candidate determined to be "Blocked" by the blocking determination unit 207 is updated based on the position of the occluder. For example, an update may be made as Formula (2-1). ${p}_{s} = \left(1-α\right) {p}_{o} + {αp}_{s}$

pₛ denotes the position of the candidate, and pₒ denotes the position of the occluder. α is an empirically-set value.

In S703, the tracking unit 205 identifies the correlation between the candidate object in the first image and the candidate object in the second image based on the result of the blocking determination. More specifically, the tracking unit 205 identifies the position of the tracking target object in the second image. When the candidate object identified as the last tracking target object is identified in the current image in S702, the tracking unit 205 identifies the position of the tracking target in the current image. When the last tracking target is not identified from candidate objects in the current image in S702, then in S1002, blocking determination is performed. When the tracking target is determined to be blocked in the current image, the occluder thereof is identified, and the position of the tracking target is updated based on Formula (2-1). Meanwhile, the feature quantity of the tracking target is not updated. In S704, the storage unit 206 stores the position and the feature quantity of the tracking target identified by the tracking unit 205. If blocking occurs, the above-described processing enables restarting of tracking after the blocking is resolved because, in some cases, the position of the tracking target is updated while the feature quantity of the tracking target is retained.

### <Modification 2-1>

A modification 2-1 performs the blocking determination by a neural network. An example of the blocking determination by the neural network is *"Zhou, Bi-box Regression for Pedestrian Detection and Occlusion, In: ECCV2018".* In this example, in S1002, the tracking unit 205 estimates the BB of an object and simultaneously estimates a non-blocked region (viewable region) of an object region. Then, when the ratio of the region where blocking has occurred to the object region exceeds a predetermined threshold value, the blocking determination unit 207 can determine the blocking.

### <Effects of Second Exemplary Embodiment>

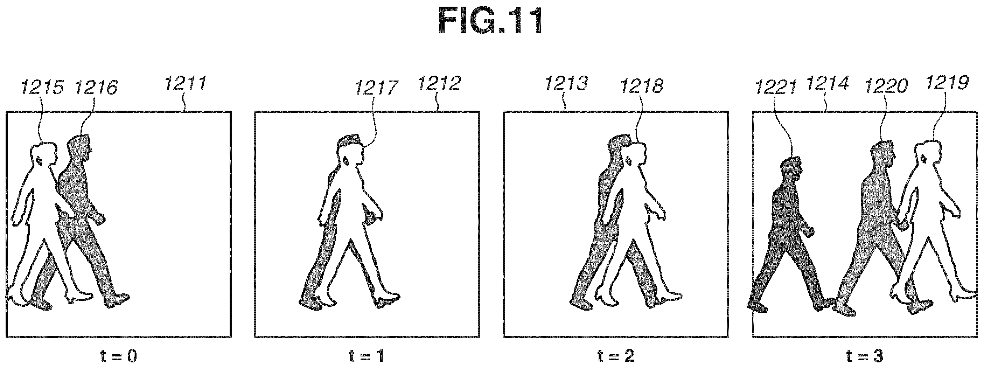

Fig. 11 illustrates an effect of updating the candidate position with an occluder position by the blocking determination and update of the position of the candidate with the occluder position.

Fig. 11 illustrates images 1211, 1212, 1213, and 1214 acquired at the times t = 0, 1, 2, and 3, respectively, and a tracking target 1216. At the time t = 0, the tracking target 1216 and a similar object 1215 exist, and the two objects are in a state of being tracked. At the time t = 1, the tracking target 1216 is hidden by a similar object 1217, and only the similar object 1217 exists as a candidate object at the time t = 1. At this time, when IoU of 1216 and 1217 exceeds a threshold value and is determined to be blocking, the position of 1216 is updated to match the position of 1217 based on Formula (2-1). At the time t = 2, since the blocking is not resolved, the position of 1216 is updated to match the position of 1218, which is the occluder. At the time t = 3, the blocking is resolved, and three different candidates 1219, 1220, and 1221 exist. At this time, a correct correlation result is the correlations between 1218 and 1219 and between 1216 and 1220. However, if the position of 1216 is not updated to match the positions of 1217 and 1218 without the blocking determination, 1216 will exist around the candidate 1221 at the time t = 3. Thus, 1216 is highly likely to be correlated with the newly acquired candidate 1221, not 1220, possibly resulting in erroneous tracking. On the other hand, when the position of the candidate 1216 is updated based on Formula (2-1), the position of 1216 becomes close to the position of 1220, making it possible to correlate 1216 with 1220. Thus, the possibility of erroneous tracking can be reduced.

### <Third Exemplary Embodiment> Single Object Tracking (Combination with Tracking Method by On-Line Learning)

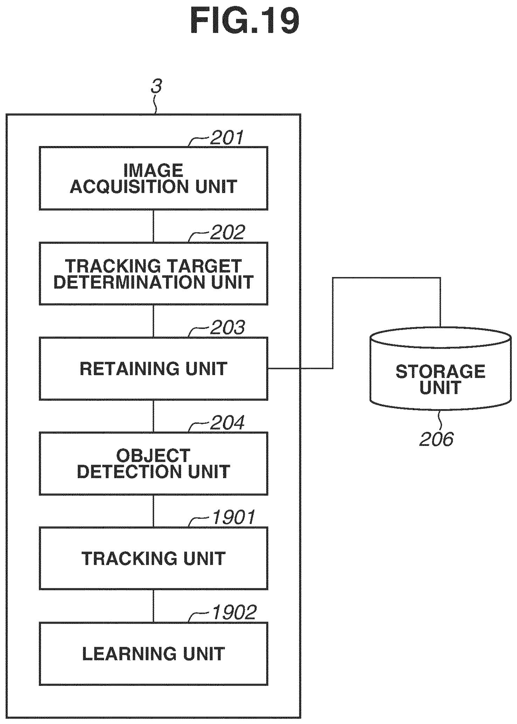

In a third exemplary embodiment, with respect to a tracking method based on online learning, a plurality of candidate objects is simultaneously tracked to stably track each of a plurality of similar objects. The hardware configuration is similar to that according to the first exemplary embodiment. Fig. 19 illustrates an example of a functional configuration of an information processing apparatus 3 according to the third exemplary embodiment. The configuration is basically similar to that according to the first exemplary embodiment in Fig. 2, and additionally includes a learning unit 1902 that performs online learning. A tracking unit 1901 identifies the position of the tracking target by inputting the current image to the learned model. The learning unit 1902 updates a connection weighting parameter of the learned model for estimating the object position based on the position of the tracking target estimated in the current image. The learned model to be used in this case is Multi-Domain Network (MDNet) (*"Nam, Learning Multi-Domain Convolutional Neural Networks for Visual Tracking, In: CVPR2016"*). MDNet inputs images to a CNN (learned model) to acquire feature quantities indicating an object. Further, each of the acquired feature quantities is input to a Fully Connection layer (hereinafter referred to as an FC layer), and whether the input feature quantity is the feature quantity of the tracking target is determined. The learning is performed on an online basis so that the FC layer outputs a larger value for an object that is more likely to be a tracking target. In the online learning, the FC layer is learned in the initial frame and subsequently learned at intervals of several frames. Descriptions of processing similar to that in the first exemplary embodiment will be omitted, and processing with differences therefrom will be described in detail.

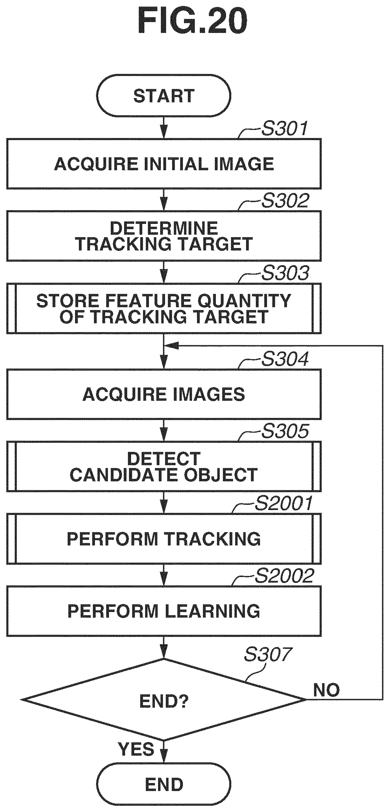

Processing performed by the information processing apparatus 3 according to the present exemplary embodiment will be described with reference to Fig. 20. Processing in S301 to S304 is similar to the processing in S301 to S304 according to the first exemplary embodiment. In S304, a search range is set based on the acquired image. A search range image is determined based on the position and the size of the past candidate object. In S305, the search range image acquired in S304 is input to the learned model to input each feature quantity acquired from the search range image to the FC layer, and then acquires an object of which the acquired likelihood (similarity) of the tracking target exceeds a threshold value, as a candidate object. The above-described MDNet is used as the learned model. In S2001, the tracking unit 1901 identifies the position of the tracking target from among candidate objects. In S2002, the learning unit 1902 updates the parameters of the learned model based on a result of the determination of the tracking target.

Such a tracking method based on online learning can reduce erroneous tracking by simultaneously tracking a plurality of candidates in a similar way to the first exemplary embodiment.

### <Fourth Exemplary Embodiment> Multiple Objects Tracking

In a fourth exemplary embodiment, a case where not one tracking target but a plurality of tracking targets is set is described. Even when a plurality of similar objects is tracked, simultaneously tracking candidate objects detected in the past enables stable tracking even if a tracking target is once lost. The hardware configuration is similar to that according to the first exemplary embodiment. An information processing apparatus according to the present exemplary embodiment has a functional configuration similar to that of the information processing apparatus 1 according to the first exemplary embodiment, except for a difference in processing between the tracking target determination unit 202 and the tracking unit 205. The tracking target determination unit 202 determines a plurality of objects as tracking targets. The tracking target determination unit 202 determines the tracking targets by a method similar to that according to the first exemplary embodiment. All objects included in a certain image may be acquired as the tracking targets. The tracking unit 205 tracks detected objects with regard to a plurality of tracking targets. More specifically, the tracking unit 205 retains the CNN features of the plurality of candidate objects and performs correlation by using the similarity between the candidate objects at the times t and t + 1.

Processing performed by the information processing apparatus 1 according to the present exemplary embodiment will be described. A flowchart according to the present exemplary embodiment corresponds to Fig. 3. In S301, the image acquisition unit 201 acquires the image (initial image) that captures a predetermined object. In S302, the tracking target determination unit 202 determines a plurality of tracking target objects in the image acquired in S301. In S303, the retaining unit 203 retains the feature quantities of a plurality of tracking targets in the image containing the determined tracking target based on the learned model. In this case, the Detect-Track method is used as the learned model ("*Feichtenhofer, Detect to Track and Track to Detect, In: ICCV2017*")*.* The Detect-Track method performs object detection by using the CNN for each frame in the continuous time series. Then, in S304, the image acquisition unit 201 acquires images captured at a plurality of times to perform tracking processing. In S305, based on the learned model, the object detection unit 204 detects the position of the candidate object in temporally continuous images acquired by the image acquisition unit 201. First, the object detection unit 204 detects a candidate object by using the CNN (learned model) for each continuous frame in time series. More specifically, the object detection unit 204 acquires the CNN feature at the time t and the CNN feature at the time t + 1. Next, the object detection unit 204 detects the position of the candidate object by calculating the cross correlation between the CNN feature acquired at the time t and the CNN feature acquired at the time t + 1. In S306, the tracking unit 205 identifies a plurality of tracking targets in the current image (t + 1). In this case, the tracking unit 205 first estimates a variation ΔBB of the BB (a variation of the BB position and a variation of the BB size) for each object. More specifically, the tracking unit 205 estimates a variation of the BB by comparing BB(t + 1) with BB(t) + ΔBB(t). In this case, objects having a close variation of the BB position and a close variation of the BB size are determined to be an identical object, and thus correlation of each object can be made. Next, the tracking unit 205 calculates a distance between the CNN feature of the correlated candidate object at the time t and the CNN feature of the correlated candidate object at the time t + 1 based on Formula (1-1) to calculate the similarity. When there is a correlation with the similarity higher than a predetermined value, tracking is performed in correlation with the former detection result. The correlation may be established in relatively descending order of the similarity. When there is no correlation with the similarity higher than the predetermined value, the current detection result (feature quantity and position) is retained without being correlated with the former detection result.

In a case where two objects are detected at the time t and one object is detected at the time t + 1, the object identical to the object at the time t + 1 is assumed to be the object having a high similarity of the two objects acquired at the time t. Correlating objects having the high similarity enables reduction of the possibility of erroneous tracking. However, there may arise a case where an object detected at the time t is detected at the time t + 1 due to occurrence of blocking. In this case, if at least one candidate object exists in addition to the tracking target object at the time t + 1, erroneous tracking on a candidate object at a close position may be started. Thus, in S306, the CNN features of a plurality of objects to be candidate objects may be retained, and the similarities with the feature quantities of the candidate objects retained at the time of the similarity calculation may be calculated. When the tracking target object is blocked, the correlation cannot be identified, but tracking can be restarted when the blocking is resolved.

The present invention is also implemented by performing the following processing. More specifically, software (program) for implementing the functions of the above-described exemplary embodiments is supplied to a system or an apparatus via a data communication network or various types of storage media, and a computer (CPU or micro processing unit (MPU)) of the system or the apparatus reads and executes the program. The program may be provided by being recorded in a computer-readable recording medium.

## Claims

1. An information processing apparatus configured to track a specific object in images captured at a plurality of times, the information processing apparatus comprising:
a retaining unit configured to retain a feature quantity of a tracking target based on a learned model configured to detect a position of a predetermined object in an input image;
an acquisition unit configured to acquire feature quantities of objects in a plurality of images based on the learned model;
a detection unit configured to detect a candidate object similar to the tracking target based on the feature quantity of the tracking target and the feature quantities of the objects acquired from the plurality of images; and
an identification unit configured to identify a correlation between the candidate object detected in a first image and the candidate object in a second image captured at a different time from the first image among the plurality of images,
the information processing apparatus being **characterised in that** it further comprises:
a learning unit configured to update parameters of the learned model based on teacher data indicating the position of the tracking target in an image.

2. The information processing apparatus according to claim 1, wherein the identification unit identifies the tracking target in the second image based on the correlation between the candidate object detected in the first image and the candidate object detected in the second image.

3. The information processing apparatus according to claim 2, wherein the retaining unit retains a feature quantity of the tracking target in the second image and a feature quantity of the candidate object in the second image.

4. The information processing apparatus according to any one of claims 1 to 3, further comprising an update unit configured to update the feature quantity of the tracking target retained by the retaining unit based on the identified correlation.

5. The information processing apparatus according to claim 4,
wherein, in a case where the candidate object having a similarity between the feature quantity of the tracking target retained by the retaining unit and the feature quantity of the tracking target in the first image higher than a predetermined threshold value is detected in the second image, the update unit updates the feature quantity of the tracking target with the feature quantity acquired from the second image, and
wherein, in a case where the candidate object having a similarity with the feature quantity of the tracking target higher than the predetermined threshold value is not detected in the second image, the update unit updates the feature quantity of the tracking target with the feature quantity acquired from the first image.

6. The information processing apparatus according to claim 4 or 5,
wherein the detection unit detects positions of the candidate objects in the plurality of images,
wherein, in a case where the candidate object having a similarity with the feature quantity of the tracking target in the first image higher than the predetermined threshold value is detected in the second image, the update unit updates a position of the tracking target in the second image, and
wherein, in a case where the candidate object having a similarity with the feature quantity of the tracking target higher than the predetermined threshold value is not detected in the second image, the update unit does not update the position of the tracking target.

7. The information processing apparatus according to any one of claims 1 to 6, wherein the identification unit identifies correlations of candidate objects other than the tracking target in the plurality of images.

8. The information processing apparatus according to any one of claims 1 to 7, wherein the retaining unit retains the feature quantity of an object specified by a user as the feature quantity of the tracking target.

9. The information processing apparatus according to any one of claims 1 to 8,
wherein the first image is an image captured before the second image,
wherein the information processing apparatus further comprises an extraction unit configured to extract a partial image to detect the candidate object in the second image based on the position of the candidate object detected in the first image, and
wherein the acquisition unit acquires the feature quantity of the object from the second image based on the partial image of the second image extracted by the extraction unit.

10. The information processing apparatus according to claim 9, wherein, in the second image, the extraction unit extracts a partial image in a predetermined size from a region corresponding to a vicinity of the candidate object detected in the first image.

11. The information processing apparatus according to claim 10, further comprising a calculation unit configured to acquire a loss for a position in the image where an object similar to the tracking target is estimated, based on the teacher data indicating the position of the tracking target in the image,
wherein the learning unit updates the parameters of the learned model based on the loss acquired by the calculation unit.

12. A computer program comprising instructions which,
when the program is executed by a computer, cause the computer to function as each unit included in the information processing apparatus according to any one of claims 1 to 11.

13. A computer-implemented information processing method for tracking a specific object in images captured at a plurality of times, the information processing method comprising:
retaining a feature quantity of a tracking target based on a learned model that detects a position of a predetermined object in an input image;
acquiring feature quantities of objects in a plurality of images based on the learned model;
detecting a candidate object similar to the tracking target based on the feature quantity of the tracking target and the feature quantities of the objects acquired from the plurality of images; and
identifying a correlation between the candidate object detected in a first image among the plurality of images and the candidate object in a second image captured at a different time from the first image,
the information processing method being **characterised in that** it further comprises:
updating parameters of the learned model based on teacher data indicating the position of the tracking target in an image.

## Patentansprüche

1. Informationsverarbeitungsvorrichtung, die konfiguriert ist, ein spezifisches Objekt in Bildern zu verfolgen, die zu mehreren Zeiten aufgenommen werden, wobei die Informationsverarbeitungsvorrichtung umfasst:
eine Vorhalteeinheit, die konfiguriert ist, eine Merkmalsmenge eines Verfolgungsziels basierend auf einem gelernten Modell vorzuhalten, das konfiguriert ist, eine Position eines vorbestimmten Objekts in einem Eingangsbild zu detektieren;
eine Erfassungseinheit, die konfiguriert ist, Merkmalsmengen von Objekten in mehreren Bildern basierend auf dem gelernten Modell zu erfassen;
eine Detektionseinheit, die konfiguriert ist, ein dem Verfolgungsziel ähnliches Kandidatenobjekt basierend auf der Merkmalsmenge des Verfolgungsziels und den Merkmalsmengen der Objekte, welche aus den mehreren Bildern erfasst werden, zu detektieren; und
eine Identifikationseinheit, die konfiguriert ist, eine Korrelation zwischen dem Kandidatenobjekt, das in einem ersten Bild detektiert wird, und dem Kandidatenobjekt in einem zweiten Bild, das zu einer anderen Zeit als das erste Bild aufgenommen wird, unter den mehreren Bildern, zu identifizieren, wobei die Informationsverarbeitungsvorrichtung **dadurch gekennzeichnet ist, dass** sie ferner umfasst:
eine Lerneinheit, die konfiguriert ist, Parameter des gelernten Modells basierend auf Lehrdaten, welche die Position des Verfolgungsziels in einem Bild angeben, zu aktualisieren.

2. Informationsverarbeitungsvorrichtung nach Anspruch 1, wobei die Identifikationseinheit das Verfolgungsziel im zweiten Bild basierend auf der Korrelation zwischen dem Kandidatenobjekt, das im ersten Bild detektiert wird, und dem Kandidatenobjekt, das im zweiten Bild detektiert wird, identifiziert.

3. Informationsverarbeitungsvorrichtung nach Anspruch 2, wobei die Vorhalteeinheit eine Merkmalsmenge des Verfolgungsziels im zweiten Bild und eine Merkmalsmenge des Kandidatenobjekts im zweiten Bild vorhält.

4. Informationsverarbeitungsvorrichtung nach einem der Ansprüche 1 bis 3, ferner umfassend eine Aktualisierungseinheit, die konfiguriert ist, die Merkmalsmenge des Verfolgungsziels, welche von der Vorhalteeinheit vorgehalten wird, basierend auf der identifizierten Korrelation zu aktualisieren.

5. Informationsverarbeitungsvorrichtung nach Anspruch 4,
wobei in einem Fall, in welchem das Kandidatenobjekt, das eine Ähnlichkeit zwischen der von der Vorhalteeinheit vorgehaltenen Merkmalsmenge des Verfolgungsziels und der Merkmalsmenge des Verfolgungsziels im ersten Bild aufweist, welche höher als ein vorbestimmter Schwellenwert ist, im zweiten Bild detektiert wird, die Aktualisierungseinheit die Merkmalsmenge des Verfolgungsziels mit der Merkmalsmenge, welche aus dem zweiten Bild erfasst wird, aktualisiert, und
wobei in einem Fall, in welchem das Kandidatenobjekt, das eine Ähnlichkeit mit der Merkmalsmenge des Verfolgungsziels aufweist, welche höher als der vorbestimmte Schwellenwert ist, im zweiten Bild nicht detektiert wird, die Aktualisierungseinheit die Merkmalsmenge des Verfolgungsziels mit der Merkmalsmenge, welche aus dem ersten Bild erfasst wird, aktualisiert.

6. Informationsverarbeitungsvorrichtung nach Anspruch 4 oder 5,
wobei die Detektionseinheit Positionen der Kandidatenobjekte in den mehreren Bildern detektiert,
wobei in einem Fall, in welchem das Kandidatenobjekt, das eine Ähnlichkeit mit der Merkmalsmenge des Verfolgungsziels im ersten Bild aufweist, welche höher als der vorbestimmte Schwellenwert ist, im zweiten Bild detektiert wird, die Aktualisierungseinheit eine Position des Verfolgungsziels im zweiten Bild aktualisiert, und
wobei in einem Fall, in welchem das Kandidatenobjekt, das eine Ähnlichkeit mit der Merkmalsmenge des Verfolgungsziels aufweist, welche höher als der vorbestimmte Schwellenwert ist, im zweiten Bild nicht detektiert wird, die Aktualisierungseinheit die Position des Verfolgungsziels nicht aktualisiert.

7. Informationsverarbeitungsvorrichtung nach einem der Ansprüche 1 bis 6, wobei die Identifikationseinheit Korrelationen von anderen Kandidatenobjekten als dem Verfolgungsziel in den mehreren Bildern identifiziert.

8. Informationsverarbeitungsvorrichtung nach einem der Ansprüche 1 bis 7, wobei die Vorhalteeinheit die Merkmalsmenge eines Objekts, welches von einem Benutzer spezifiziert wird, als die Merkmalsmenge des Verfolgungsziels vorhält.

9. Informationsverarbeitungsvorrichtung nach einem der Ansprüche 1 bis 8,
wobei das erste Bild ein Bild ist, das vor dem zweiten Bild aufgenommen wird,
wobei die Informationsverarbeitungsvorrichtung ferner eine Extraktionseinheit umfasst, die konfiguriert ist, ein Teilbild zu extrahieren, um das Kandidatenobjekt im zweiten Bild basierend auf der Position des Kandidatenobjekts, das im ersten Bild detektiert wird, zu detektieren, und
wobei die Erfassungseinheit die Merkmalsmenge des Objekts aus dem zweiten Bild basierend auf dem Teilbild des zweiten Bilds, welches durch die Extraktionseinheit extrahiert wird, erfasst.

10. Informationsverarbeitungsvorrichtung nach Anspruch 9, wobei im zweiten Bild die Extraktionseinheit ein Teilbild in einer vorbestimmten Größe aus einem Gebiet extrahiert, das einer Umgebung des im ersten Bild detektierten Kandidatenobjekts entspricht.

11. Informationsverarbeitungsvorrichtung nach Anspruch 10, ferner umfassend eine Berechnungseinheit, die konfiguriert ist, einen Verlust für eine Position im Bild, wo ein dem Verfolgungsziel ähnliches Objekt geschätzt wird, basierend auf den Lehrdaten, welche die Position des Verfolgungsziels im Bild angeben, zu erfassen,
wobei die Lerneinheit die Parameter des gelernten Modells basierend auf dem durch die Berechnungseinheit erfassten Verlust aktualisiert.

12. Computerprogramm, umfassend Anweisungen, die, wenn das Programm von einem Computer ausgeführt wird, den Computer veranlassen, als eine jeweilige Einheit zu funktionieren, welche in der Informationsverarbeitungsvorrichtung nach einem der Ansprüche 1 bis 11 enthalten ist.

13. Computerimplementiertes Informationsverarbeitungsverfahren zum Verfolgen eines spezifischen Objekts in Bildern, die zu mehreren Zeiten aufgenommen werden, wobei das Informationsverarbeitungsverfahren umfasst:
Vorhalten einer Merkmalsmenge eines Verfolgungsziels basierend auf einem gelernten Modell, welches eine Position eines vorbestimmten Objekts in einem Eingangsbild detektiert;
Erfassen von Merkmalsmengen von Objekten in mehreren Bildern basierend auf dem gelernten Modell;
Detektieren eines dem Verfolgungsziel ähnlichen Kandidatenobjekts basierend auf der Merkmalsmenge des Verfolgungsziels und den Merkmalsmengen der Objekte, welche aus den mehreren Bildern erfasst werden; und
Identifizieren einer Korrelation zwischen dem Kandidatenobjekt, das in einem ersten Bild unter den mehreren Bildern detektiert wird, und dem Kandidatenobjekt in einem zweiten Bild, das zu einer anderen Zeit als das erste Bild aufgenommen wird, wobei das Informationsverarbeitungsverfahren **dadurch gekennzeichnet ist, dass** es ferner umfasst:
Aktualisieren von Parametern des gelernten Modells basierend auf Lehrdaten, welche die Position des Verfolgungsziels in einem Bild angeben.

## Revendications

1. Appareil de traitement d'informations configuré pour suivre un objet spécifique dans des images capturées à une pluralité de moments, l'appareil de traitement d'informations comprenant :
une unité de conservation configurée pour conserver une quantité de caractéristiques d'une cible de suivi sur la base d'un modèle appris configuré pour détecter une position d'un objet prédéterminé dans une image d'entrée ; une unité d'acquisition configurée pour acquérir des quantités de caractéristiques d'objets dans une pluralité d'images sur la base du modèle appris ;
une unité de détection configurée pour détecter un objet candidat similaire à la cible de suivi sur la base de la quantité de caractéristiques de la cible de suivi et des quantités de caractéristiques des objets acquises à partir de la pluralité d'images ; et
une unité d'identification configurée pour identifier une corrélation entre l'objet candidat détecté dans une première image et l'objet candidat dans une seconde image capturée à un moment différent de la première image parmi la pluralité d'images,
l'appareil de traitement d'informations étant **caractérisé en ce qu'**il comprend en outre :
une unité d'apprentissage configurée pour mettre à jour des paramètres du modèle appris sur la base de données d'enseignant indiquant la position de la cible de suivi dans une image.

2. Appareil de traitement d'informations selon la revendication 1, dans lequel l'unité d'identification identifie la cible de suivi dans la seconde image sur la base de la corrélation entre l'objet candidat détecté dans la première image et l'objet candidat détecté dans la seconde image.

3. Appareil de traitement d'informations selon la revendication 2, dans lequel l'unité de conservation conserve une quantité de caractéristiques de la cible de suivi dans la seconde image et une quantité de caractéristiques de l'objet candidat dans la seconde image.

4. Appareil de traitement d'informations selon l'une quelconque des revendications 1 à 3, comprenant en outre une unité de mise à jour configurée pour mettre à jour la quantité de caractéristiques de la cible de suivi conservée par l'unité de conservation sur la base de la corrélation identifiée.

5. Appareil de traitement d'informations selon la revendication 4,
dans lequel, dans un cas où l'objet candidat ayant une similitude entre la quantité de caractéristiques de la cible de suivi conservée par l'unité de conservation et la quantité de caractéristiques de la cible de suivi dans la première image supérieure à une valeur seuil prédéterminée est détecté dans la seconde image, l'unité de mise à jour met à jour la quantité de caractéristiques de la cible de suivi avec la quantité de caractéristiques acquise à partir de la seconde image, et
dans lequel, dans un cas où l'objet candidat ayant une similitude avec la quantité de caractéristiques de la cible de suivi supérieure à la valeur seuil prédéterminée n'est pas détecté dans la seconde image, l'unité de mise à jour met à jour la quantité de caractéristiques de la cible de suivi avec la quantité de caractéristiques acquise à partir de la première image.

6. Appareil de traitement d'informations selon la revendication 4 ou 5,
dans lequel l'unité de détection détecte des positions des objets candidats dans la pluralité d'images,
dans lequel, dans un cas où l'objet candidat ayant une similitude avec la quantité de caractéristiques de la cible de suivi dans la première image supérieure à la valeur seuil prédéterminée est détecté dans la seconde image, l'unité de mise à jour met à jour une position de la cible de suivi dans la seconde image, et
dans lequel, dans un cas où l'objet candidat ayant une similitude avec la quantité de caractéristiques de la cible de suivi supérieure à la valeur seuil prédéterminée n'est pas détecté dans la seconde image, l'unité de mise à jour ne met pas à jour la position de la cible de suivi.

7. Appareil de traitement d'informations selon l'une quelconque des revendications 1 à 6, dans lequel l'unité d'identification identifie des corrélations d'objets candidats autres que la cible de suivi dans la pluralité d'images.

8. Appareil de traitement d'informations selon l'une quelconque des revendications 1 à 7, dans lequel l'unité de conservation conserve la quantité de caractéristiques d'un objet spécifié par un utilisateur en tant que quantité de caractéristiques de la cible de suivi.

9. Appareil de traitement d'informations selon l'une quelconque des revendications 1 à 8,
dans lequel la première image est une image capturée avant la seconde image,
dans lequel l'appareil de traitement d'informations comprend en outre une unité d'extraction configurée pour extraire une image partielle pour détecter l'objet candidat dans la seconde image sur la base de la position de l'objet candidat détecté dans la première image, et
dans lequel l'unité d'acquisition acquiert la quantité de caractéristiques de l'objet à partir de la seconde image sur la base de l'image partielle de la seconde image extraite par l'unité d'extraction.

10. Appareil de traitement d'informations selon la revendication 9, dans lequel, dans la seconde image, l'unité d'extraction extrait une image partielle d'une taille prédéterminée d'une région correspondant à un voisinage de l'objet candidat détecté dans la première image.

11. Appareil de traitement d'informations selon la revendication 10, comprenant en outre une unité de calcul configurée pour acquérir une perte pour une position dans l'image où un objet similaire à la cible de suivi est estimé, sur la base des données d'enseignant indiquant la position de la cible de suivi dans l'image,
dans lequel l'unité d'apprentissage met à jour les paramètres du modèle appris sur la base de la perte acquise par l'unité de calcul.

12. Programme d'ordinateur comprenant des instructions qui, lorsque le programme est exécuté par un ordinateur, amènent l'ordinateur à fonctionner comme chaque unité comprise dans l'appareil de traitement d'informations selon l'une quelconque des revendications 1 à 11.

13. Procédé de traitement d'informations mis en œuvre par ordinateur pour suivre un objet spécifique dans des images capturées à une pluralité de moments, le procédé de traitement d'informations comprenant :
la conservation d'une quantité de caractéristiques d'une cible de suivi sur la base d'un modèle appris qui détecte une position d'un objet prédéterminé dans une image d'entrée ;
l'acquisition de quantités de caractéristiques d'objets dans une pluralité d'images sur la base du modèle appris ; la détection d'un objet candidat similaire à la cible de suivi sur la base de la quantité de caractéristiques de la cible de suivi et des quantités de caractéristiques des objets acquises à partir de la pluralité d'images ; et
l'identification d'une corrélation entre l'objet candidat détecté dans une première image parmi la pluralité d'images et l'objet candidat dans une seconde image capturée à un moment différent de la première image,
le procédé de traitement d'informations étant **caractérisé en ce qu'**il comprend en outre :
la mise à jour de paramètres du modèle appris sur la base de données d'enseignant indiquant la position de la cible de suivi dans une image.
